# EUROPÄISCHE PATENTANMELDUNG

(11) **EP 2 006 497 A1**
(43) Veröffentlichungstag der Anmeldung: **24.12.2008**
(21) Anmeldenummer: 07012191.8
(22) Anmeldetag: 21.06.2007
(51) Int. Cl.: F01D 25/16, F16C 17/04, F16C 39/06

(54) **Axiallagerscheibe für einen Turbomaschinenrotor einer Turbomaschine und Turbomaschinenrotor**

(71) Anmelder: SIEMENS AKTIENGESELLSCHAFT, 80333 München (DE)
(72) Erfinder: Biesenbach, Martin, Dr., 40225 Düsseldorf (DE); Bode, Ralf, 47441 Moers (DE)

(57) **Zusammenfassung**

Eine Axiallagerscheibe (12) für einen Turbomaschinenrotor einer Turbomaschine weist ein Trägerteil (14) und ein Lagerteil (15) jeweils aus einem sauergasbeständigen Material auf, wobei das Trägerteilmaterial hochfest und das Lagerteilmaterial ferromagnetisch ist, sowie das Lagerteil (15) an dem Trägerteil (14) derart abgestützt ist, dass zur Axiallagerung des Turbomaschinenrotors mittels der Axiallagerscheibe (12) das Lagerteil (15) mit einem Axialmagnetlager der Turbomaschine zusammenwirkbar ist. Der Turbomaschinenrotor für die Turbomaschine weist die Axiallagerscheibe (12) auf.

## Beschreibung

Die Erfindung betrifft eine Axiallagerscheibe für einen Turbomaschinenrotor einer Turbomaschine und einen Turbomaschinenrotor mit der Axiallagerscheibe.

Eine Turbomaschine weist prinzipiell einen Rotor auf. Die Turbomaschine ist beispielsweise ein Einwellenverdichter, dessen Rotor eine Welle aufweist, auf der Laufräder aufgefädelt sind. Der Rotor ist an den Längsendbereichen der Welle mittels Lager gelagert. Die Lager sind eingerichtet Radialkräfte und/oder Axialkräfte, die auf den Rotor einwirken, aufzunehmen. Die Lager können Gleitlager, insbesondere Kippsegmentgleitlager sein.

Das Lager zur Aufnahme von Axialkräften ist das Axiallager, das zur axialen Führung des Rotors an einer Axiallagerscheibe angreift, die auf der Welle angebracht ist. Herkömmlich ist die Axiallagerscheibe nicht aus einem Stück mit der Welle gefertigt, sondern mit einer lösbaren Verbindung auf der Welle befestigt. Herkömmlich wird die Axiallagerscheibe mittels einer Schrumpfverbindung auf die Welle aufgesetzt. Die Schrumpfverbindung verursacht in der Axiallagerscheibe hohe Spannungen, wodurch das Material der Axiallagerscheibe eine hohe Streckgrenze haben soll. Herkömmlich ist die Axiallagerscheibe aus Stahl hergestellt.

In Anlagen der chemischen Industrie wird Prozessgas verarbeitet, wobei Turboverdichter zum Aufzudrücken des Prozessgases vorgesehen sind. Ist das Prozessgas chemisch aggressiv, können die Bauteile des Turboverdichters beeinträchtigt werden, die mit dem Prozessgas in Kontakt treten. Beispielsweise wird ein Rohgasverdichter in einer Ethylen-Anlage von Rohgas durchströmt, das schwefelwasserstoffhaltig ist. Bei einem derartigen Betrieb des Rohgasverdichters herrscht eine Sauergasbedingung, deren Definition beispielsweise gemäß ISO 15156 festgelegt ist. Sind die unter der Sauergasbedingung betriebenen Bauteile aus einem hochfesten Stahl gefertigt, so besteht die Gefahr, dass in dem hochfesten Stahl Spannungsrisskorrosion auftritt. Unter dem Einfluss einer mechanischen Belastung beispielsweise einer Fliehkraft bei Rotation eines Rohgasverdichterrotors kann die Spannrisskorrosion eine Beschädigung oder Zerstörung der betroffenen Bauteile zur Folge haben. Dadurch kann in dem Rohgasverdichter ein kapitaler Schaden entstehen.

Um einen derartigen Schaden in dem Rohgasverdichter zu vermeiden sind die mechanisch hoch belasteten und der Sauergasbedingung ausgesetzten Bauteile aus einem hochfesten Stahl gefertigt, der beständig gegen die Spannungsrisskorrosion ist. Zu den betroffenen Bauteilen des Rohgasverdichters zählen üblicherweise unter anderem die Welle und die Axiallagerscheibe.

Herkömmlich ist das Kippsegmentgleitlager ölgeschmiert. Zur Ölversorgung des Kippsegmentgleitlagers ist eine entsprechende Ölversorgungsanlage in der Anlage vorzusehen, die kostenintensiv in der Anschaffung und aufwendig im Betrieb ist.

Als Alternative ist es allgemein bekannt, dass als Axiallager ein Magnetlager verwendet werden kann. Dies setzt allerdings voraus, dass die Axiallagerscheibe aus einem ferromagnetischen Material hergestellt ist. Jedoch sind alle bekannten hochfesten Stähle, die gegen die Spannungsrisskorrosion hervorgerufen durch den Betrieb unter der Sauergasbedingung beständig sind, nicht ferromagnetisch. Dadurch könnte eine derartige nicht ferromagnetische Axiallagerscheibe mit dem Magnetlager nicht wechselwirken. Somit würde das Magnetlager in Kombination mit der Axiallagerscheibe aus sauergasbeständigem und hochfestem Stahl nicht funktionieren.

Soll für das Axiallager dennoch das Magnetlager vorgesehen werden, müsste die Axiallagerscheibe aus einem ferromagnetischen Material hergestellt sein. Ein derartiges Material, das hochfest und ferromagnetisch ist, ist zwar bekannt, ist aber nicht beständig gegen Spannungsrisskorrosion. Somit ist die Axiallagerscheibe, die aus diesem Material hergestellt ist, beim Betrieb in dem Rohgasverdichter gegen das schwefelwasserstoffhaltige Rohgas abzuschirmen, so dass die Axiallagerscheibe mit dem Rohgas nicht in Kontakt kommt. Diese Abschirmung ist allerdings konstruktiv sehr aufwändig.

Alternativ könnte für die Axiallagerscheibe ein nichtrostender Stahl verwendet werden, der ferromagnetisch und beständig gegen die Spannungsrisskorrosion ist. Ein derartiger nichtrostender Stahl ist jedoch nicht hochfest. Somit wäre der Rohgasverdichter, der mit der Axiallagerscheibe aus dem nichtrostendem Stahl ausgestattet ist, nur bei einer abgesenkter Drehzahl zu betreiben, wodurch Einbußen im Druckverhältnis und im Wirkungsgrad des Rohgasverdichters in Kauf genommen werden müssten.

Aufgabe der Erfindung ist es, eine Axiallagerscheibe für einen Turbomaschinenrotor einer Turbomaschine und den Turbomaschinenrotor mit der Axiallagerscheibe zu schaffen, wobei die Turbomaschine einfach konstruiert ist, einen hohen Wirkungsgrad und ein hohes Druckverhältnis hat, wobei der Betrieb der Turbomaschine energiesparsam und kostengünstig ist.

Die erfindungsgemäße Axiallagerscheibe für einen Turbomaschinenrotor einer Turbomaschine weist ein Trägerteil und ein Lagerteil jeweils aus einem sauergasbeständigen Material auf, wobei das Trägerteilmaterial hochfest und das Lagerteilmaterial ferromagnetisch ist, sowie das Lagerteil an dem Trägerteil derart abgestützt ist, dass zur Axiallagerung des Turbomaschinenrotors mittels der Axiallagerscheibe das Lagerteil mit einem Axialmagnetlager der Turbomaschine zusammenwirkbar ist.

Die Axiallagerscheibe ist zur Axiallagerung des Turbomaschinenrotors mittels eines Axiallagers vorgesehen, wobei die Axiallagerscheibe an dem Turbomaschinenrotor anbaubar ist und das Axiallager der Turbomaschine das Axialmagnetlager ist. Die Axiallagerscheibe weist erfindungsgemäß zwei Komponenten auf, nämlich das Lagerteil und das Trägerteil. Das Trägerteil ist aus dem hochfesten Material gefertigt. Dadurch kann das Trägerteil hohen mechanischen Belastungen widerstehen, wodurch die Axiallagerscheibe eine hohe Festigkeit aufweist. Das Lagerteil ist aus dem ferromagnetischen Material gefertigt, wodurch das Lagerteil magnetische Kräfte aufnehmen kann. Dadurch kann das Lagerteil mit den Axialmagnetlager magnetisch wechselwirken. Ferner ist das Lagerteil an dem Trägerteil abgestützt, so dass die auf das Lagerteil ausgeübten Lagerkräfte von dem Trägerteil aufgenommen werden können.

Das Trägerteil und das Lagerteil sind aus sauerbgasbeständigen Material gefertigt, wodurch sowohl das Trägerteil als auch das Lagerteil bei Kontakt mit schwefelwasserstoffhaltigem Gas beständig gegen Spannungsrisskorrosion sind. Dadurch braucht vorteilhaft die Axiallagerscheibe von Sauergas nicht abgeschirmt zu werden. Unter der Sauergasbedingung sind insbesondere die gemäß ISO 15156 definierten Zustände zu verstehen.

Bekannte sauergasbeständige und hochfeste Materialien sind nicht ferromagnetisch und bekannte sauergasbeständige ferromagnetische Materialien sind nicht hochfest. Es sind keine Materialen bekannt, die sowohl sauergasbeständig als auch hochfest und ferromagnetisch sind. Dadurch, dass die Axiallagerscheibe die zwei Komponenten aufweist, nämlich das Lagerteil und das Trägerteil, können erfindungsgemäß die beiden Komponenten aus unterschiedlichen Materialien gefertigt werden. Das Trägerteilmaterial ist erfindungsgemäß sauergasbeständig und hochfest, so dass das Trägerteil und somit auch die Axiallagerscheibe neben der Sauergasbeständigkeit eine hohe Festigkeit hat. Das Lagerteilmaterial ist erfindungsgemäß sauergasbeständig und ferromagnetisch, so dass das Lagerteil und somit auch die Axiallagerscheibe sowohl die Sauergasbeständigkeit hat als auch mit dem Axialmagnetlager in Wechselwirkung stehen kann. Dadurch kann der Turbinenmaschinenrotor mittels der erfindungsgemäßen Axiallagerscheibe aufgrund der ferromagnetischen Eigenschaft des Lagerteils vorteilhaft mit dem Axialmagnetlager gelagert werden, wobei die Axiallagerscheibe aufgrund der hohen Festigkeit des Trägerteilmaterials stark mechanisch belastbar ist, was mit einer herkömmlichen Axiallagerscheibe vergleichbar ist. Somit kann der Turbinenmaschinenrotor ohne eine Verschlechterung seiner herkömmlichen Betriebsbedingung und/oder seines Wirkungsgrads und/oder seiner Performence in Kauf nehmen zu müssen betrieben werden, obwohl der Turbinenmaschinenrotor magnetgelagert ist.

Der erfindungsgemäße Turbomaschinenrotor für die Turbomaschine weist die Axiallagerscheibe auf.

Es ist bevorzugt, dass das Trägerteilmaterial eine erste Metalllegierung mit hoher Streckgrenze ist.

Die erste Metalllegierung weist die hohe Streckgrenze auf, so dass das Trägerteil eine hohe Festigkeit hat. Die erste Metalllegierung braucht notwendigerweise nicht ferromagnetisch zu sein.

Bevorzugt ist die erste Metalllegierung eine Nickelbasislegierung, bevorzugt NiCr19NbMo (2.4668, "Alloy 718", UNS N07718).

Alternativ bevorzugt ist das Trägermaterial eine Keramik.

Vorteilhaft weist die Keramik eine hohe thermische Widerstandsfähigkeit auf.

Alternativ bevorzugt ist das Trägermaterial ein Verbundwerkstoff, der bevorzugt eine polymere Matrix aufweist. Bevorzugt ist der Verbundwerkstoff ein kohlenstofffaserverstärktes Polymer.

Bevorzugt weist das kohlenstofffaserverstärkte Polymer eine hohe elastische Verformbarkeit auf. Ferner weist vorteilhaft das kohlenstofffaserverstärkte Polymer eine hohe Biegewechselfestigkeit auf, so dass die Axiallagerscheibe eine hohe Lebensdauer hat.

Es ist bevorzugt, dass das Lagermaterial eine zweite Metalllegierung ist, die bevorzugt ein Kohlenstoffstahl ist.

Vorteilhaft braucht die zweite Metalllegierung nicht hochfest zu sein. Der Kohlenstoffstahl weist zwar eine niedrige Härte auf, ist aber vorteilhaft ferromagnetisch.

Es ist bevorzugt, dass das Trägerteil und das Lagerteil mittels eines unlösbaren Befestigungsmittels fest miteinander verbunden sind.

Mit dem unlösbaren Befestigungsmittel ist zwischen dem Trägerteil und dem Lagerteil eine mechanische Kopplung geschaffen. Dadurch können von dem Lagerteil die Kräfte insbesondere zur axialen Führung des Turbomaschinenrotors auf das Trägerteil übertragen werden.

Bevorzugt ist das unlösbare Befestigungsmittel eine Schweißverbindung, die bevorzugt eine Schmelzschweißverbindung oder eine Walzplattierung oder eine Sprengplattierung oder eine Reibschweißverbindung ist. Alternativ ist bevorzugt das unlösbare Befestigungsmittel eine Lötverbindung oder eine Klebeverbindung oder eine Nietverbindung oder eine Schrumpfverbindung oder ein weiteres Verfahren nach DIN 8593.

Vorteilhaft ist das unlösbare Befestigungsmittel einfach zu fertigen, wobei das unlösbare Befestigungsmittel eine hohe Festigkeit und eine hohe Lebensdauer hat.

Alternativ sind bevorzugt das Trägerteil und das Lagerteil mittels eines lösbaren Befestigungsmittels fest miteinander verbunden, das bevorzugt eine Schraubverbindung ist.

Die Schraubverbindung hat eine hohe Festigkeit und ist vorteilhaft bei Bedarf lösbar, so dass im Rahmen einer Wartung oder Überholung der Turbomaschine beispielsweise das Lagerteil ausgetauscht werden kann, beispielsweise bei Verschleiß.

Es ist bevorzugt, dass die Axiallagerscheibe an den Turbomaschinenrotor mittels des Trägerteils fest anbaubar ist.

Das Trägerteil weist erfindungsgemäß eine hohe Festigkeit auf, so dass vorteilhaft die Verbindung zwischen der Axiallagerscheibe und dem Turbomaschinenrotor ausreichend stabil ausgestaltet werden kann. Dadurch hat die Verbindung zwischen der Axiallagerscheibe und dem Turbomaschinenrotor eine ausreichende Festigkeit.

Bevorzugt ist das Trägerteil auf dem Turbomaschinenrotor aufschrumpfbar.

Die Schrumpfverbindung zwischen dem Trägerteil und dem Turbomaschinenrotor ist einfach herzustellen und ist in der Lage hohe Kräfte zu übertragen. Erfindungsgemäß weist das Trägerteil eine hohe Festigkeit auf, so dass das Trägerteil die bei der Schrumpfverbindung auftretenden Schrumpfspannungen aufnehmen kann.

Zwischen der Axiallagerscheibe und dem Turbomaschinenrotor könnte alternativ jede denkbare Wellenverbindung vorgesehen sein, beispielsweise eine Kerbzahnverbindung.

Alternativ ist die Axiallagerscheibe an den Turbomaschinenrotor mittels des Lagerteils anbaubar.

Vorteilhaft weist der Turbomaschinenrotor eine Welle auf, auf der die Axiallagerscheibe mittels der Schrumpfverbindung fest befestigt ist.

Im Folgenden werden bevorzugte Ausführungsbeispiele eines erfindungsgemäßen Turbomaschinenrotors anhand der beigefügten schematischen Zeichnungen erläutert. Es zeigt:
Fig. 1 einen Längsschnitt eines ersten Ausführungsbeispiels eines Turbomaschinenrotors,
Fig. 2 einen Längsschnitt eines zweiten Ausführungsbeispiels eines Turbomaschinenrotors und
Fig. 3 einen Längsschnitt eines dritten Ausführungsbeispiels eines Turbomaschinenrotors.

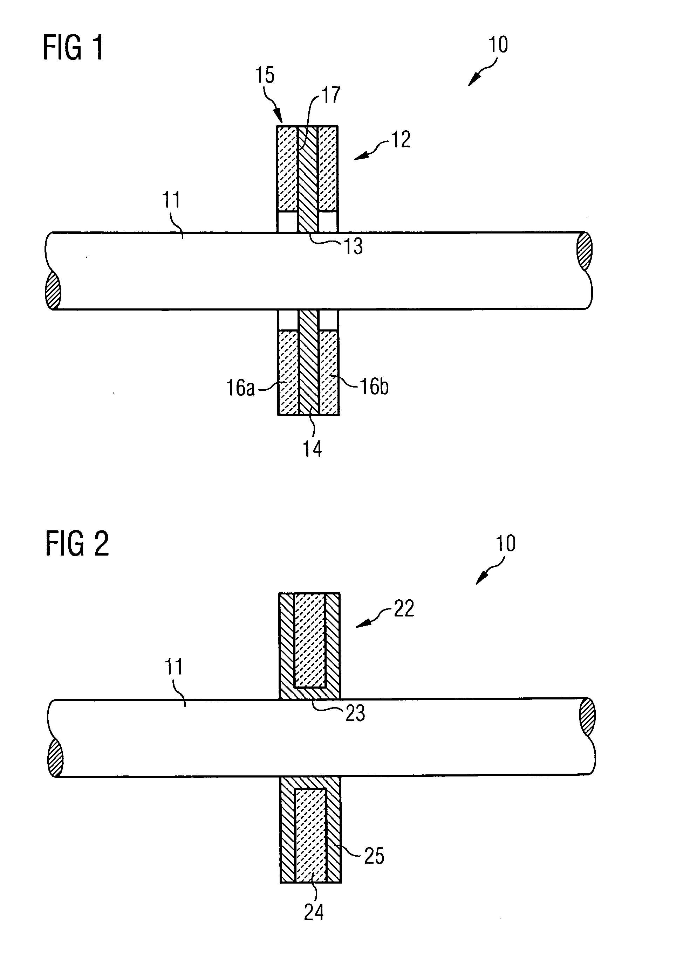

Wie es aus Fig. 1 ersichtlich ist, weist ein Turbomaschinenrotor 10 eine Welle auf, auf der eine Axiallagerscheibe 12 angeordnet ist. Die Axiallagerscheibe 12 ist auf der Welle 11 mittels einer Schrumpfverbindung 13 fest befestigt.

Die Axiallagerscheibe 12 weist ein Trägerteil 14 und ein Lagerteil 15 auf. Das Trägerteil 14 ist als eine rotationssymmetrische Scheibe ausgebildet, die in ihrem Zentrum einen die Schrumpfverbindung 13 ausbildenden Schrumpfsitz aufweist.

Das Lagerteil 15 weist eine erste Lagerscheibe 16a und eine zweite Lagerscheibe 16b auf, wobei die Lagerscheiben 16a und 16b jeweils als eine Lochscheibe ausgebildet sind, deren Außendurchmesser dem des Trägerteils 14 entspricht und dessen Innendurchmesser größer als der des Trägerteils 14 ist. Die Lagerscheiben 16a, 16b sind konzentrisch um die Welle 11 angeordnet, so dass diese von den Lagerscheiben 16a, 16b im Abstand angeordnet ist, wodurch die Schrumpfverbindung 13 lediglich zwischen dem Trägerteil 14 und der Welle 11 ausgebildet ist.

An der ersten Stirnseite des Trägerteils 14 ist die erste Lagerscheibe 16a und an der zweiten Stirnseite des Trägerteils 14 ist die zweite Lagerscheibe 16b angeordnet. Dadurch hat die Axiallagerscheibe 12 mit ihrem Trägerteil 14 und ihrem Lagerteil 15 einen schichtartigen Aufbau.

Das Trägerteil 14 ist aus einem sauergasresistenten hochfesten Material gefertigt. Das Lagerteil 15 ist aus einem sauergasresistenten ferromagnetischen Material gefertigt. Dadurch, dass sowohl das Trägerteil 14 als auch das Lagerteil 15 sauergasresistent sind, braucht beim Betrieb des Turbomaschinenrotors 10 bei Sauergasbedingung die Axiallagerscheibe 12 gegen das Sauergas nicht abgeschirmt zu werden.

Der Turbomaschinenrotor 10 ist mit der Axiallagerscheibe 12 mittels eines Magnetaxiallagers (nicht gezeigt) lagerbar. Die magnetische Wechselwirkung findet zwischen dem Axialmagnetlager und dem Lagerteil 15 statt. Dadurch, dass an den beiden Stirnseiten des Trägerteils 14 das Lagerteil 15 in Form der ersten Lagerscheibe 16a und der zweiten Lagerscheibe 16b vorgesehen ist, ist mittels des Axialmagnetlagers der Turbomaschinenrotor 10 entlang seiner Längsachse in beiden Richtungen lagerbar.

Sowohl die erste Lagerscheibe 16a als auch die zweite Lagerscheibe 16b sind an dem Trägerteil 14 mittels einer Schweißverbindung 17 fest angebracht und derart abgestützt, dass von dem Axialmagnetlager via einer magnetischen Kraft mittels des Lagerteils 15 über das Trägerteil 14 eine Lagerkraft auf die Welle 11 übertragbar ist.

Wie es aus Fig. 2 ersichtlich ist, weist der Turbomaschinenrotor 10 eine zweite Ausführungsform der Axiallagerscheibe 22 auf. Die Axiallagerscheibe 22 weist ein Trägerteil 24 und ein Lagerteil 25 auf. Das Lagerteil 25 ist mit einem ringförmigen Hohlraum versehen, in dem das Trägerteil 24 vollständig sich erstreckt. Der Hohlraum ist derart ausgebildet, dass das Trägerteil 24 in Richtung zur Welle 11 hin und in Längsachsenrichtung der Welle 11 nach außen hin von dem Lagerteil 25 abgrenzt ist. Eine Schrumpfverbindung 23 zwischen dem Lagerteil 25 und der Welle 11 ist ausgebildet, um die Axiallagerscheibe 22 auf der Welle 11 zu befestigen. Das Trägerteil 24 ist in den Hohlraum des Lagerteils 25 vergossen.

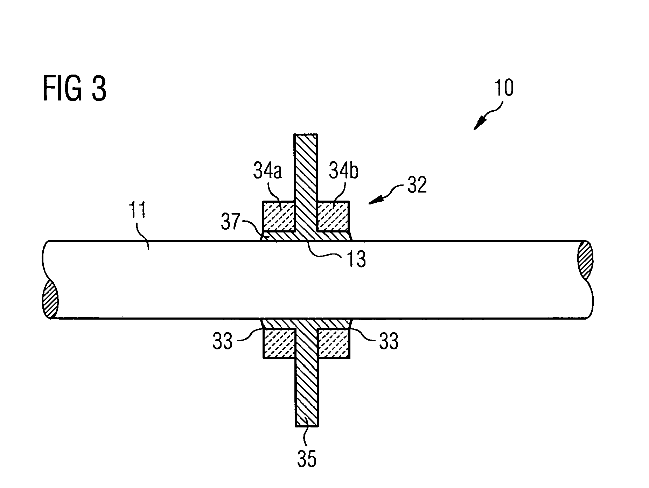

Wie es aus Fig. 3 ersichtlich ist, weist der Turbomaschinenrotor 10 eine dritte Ausführungsform der Axiallagerscheibe 32 auf. Die Axiallagerscheibe 32 weist zwei Trägerteile 4a und 34b ein Lagerteil 35 auf. Das Lagerteil 35 ist als eine Lochscheibe ausgebildet, die an ihrem Innendurchmesser einen in Längsachsenrichtung der Welle 11 sich erstreckenden Steg 37 aufweist, so dass das Lagerteil 35 einen T-förmigen Querschnitt hat.

Das Lagerteil 35 weist einen ersten Tragring 34a und einen zweiten Tragring 34b auf, die jeweils auf dem Steg 37 des Trägerteils 34 derart angeordnet sind, dass das Lagerteil 35 sich zwischen dem ersten Tragring 34a und dem zweiten Tragring 34b sich erstreckt. Die Tragringe 34a und 34b sind mittels einer Schrumpfverbindung 33 mit dem Steg 37 des Lagerteils 35 in einer Weise fest verbunden, dass gleichzeitig eine feste Schrumpfverbindung 13 zwischen dem Steg 37 des Lagerteils 35 und der Welle 11 entsteht.

### Bezugszeichenliste

- 10: Turbomaschinenrotor
- 11: Welle
- 12: Axiallagerscheibe
- 13: Schrumpfverbindung
- 14: Trägerteil
- 15: Lagerteil
- 16a: erste Lagerscheibe
- 16b: zweite Lagerscheibe
- 17: Schweißverbindung
- 22: Axiallagerscheibe
- 23: Schrumpfverbindung
- 24: Trägerteil
- 25: Lagerteil
- 32: Axiallagerscheibe
- 33: Schrumpfverbindung
- 34a: erster Tragring
- 34b: zweiter Tragring
- 35: Lagerteil
- 37: Steg

## Patentansprüche

1. Axiallagerscheibe für einen Turbomaschinenrotor einer Turbomaschine, mit einem Trägerteil (14, 24, 34) und einem Lagerteil (15, 25, 35) jeweils aus einem sauergasbeständigen Material, wobei das Trägermaterial hochfest und das Lagermaterial ferromagnetisch ist, sowie das Lagerteil (15, 25, 35) an dem Trägerteil (14, 24, 34) derart abgestützt ist, dass zur Axiallagerung des Turbomaschinenrotors (10) mittels der Axiallagerscheibe (12, 22, 32) das Lagerteil (15, 25, 35) mit einem Axialmagnetlager der Turbomaschine zusammenwirkbar ist.

2. Axiallagerscheibe gemäß Anspruch 1,
wobei das Trägerteilmaterial eine erste Metalllegierung mit hoher Streckgrenze ist.

3. Axiallagerscheibe gemäß Anspruch 2,
wobei die Metalllegierung eine Nickelbasislegierung ist.

4. Axiallagerscheibe gemäß Anspruch 3,
wobei die Nickelbasislegierung NiCr19NbMo ist.

5. Axiallagerscheibe gemäß Anspruch 1,
wobei das Trägermaterial eine Keramik ist.

6. Axiallagerscheibe gemäß Anspruch 1,
wobei das Trägermaterial ein Verbundwerkstoff ist.

7. Axiallagerscheibe gemäß Anspruch 6,
wobei der Verbundwerkstoff eine polymere Matrix aufweist.

8. Axiallagerscheibe gemäß Anspruch 7,
wobei der Verbundwerkstoff ein kohlenstofffaserverstärktes Polymer ist.

9. Axiallagerscheibe gemäß einem der Ansprüche 1 bis 8,
wobei das Lagermaterial eine zweite Metalllegierung ist.

10. Axiallagerscheibe gemäß Anspruch 9,
wobei die Metalllegierung ein Kohlenstoffstahl ist.

11. Axiallagerscheibe gemäß einem der Ansprüche 1 bis 10,
wobei das Trägerteil (14, 24, 34) und das Lagerteil (15, 25, 35) mittels eines unlösbaren Befestigungsmittels (17) fest miteinander verbunden sind.

12. Axiallagerscheibe gemäß Anspruch 11,
wobei die unlösbare Befestigung eine Schweißverbindung (17) ist.

13. Axiallagerscheibe gemäß Anspruch 12,
wobei die Schweißverbindung eine Schmelzschweißverbindung oder eine Walzplattierung oder eine Sprengplattierung oder eine Reibschweißverbindung ist.

14. Axiallagerscheibe gemäß Anspruch 11,
wobei das unlösbare Befestigungsmittel eine Lötverbindung oder eine Klebeverbindung oder eine Nietverbindung oder eine Schrumpfverbindung ist.

15. Axiallagerscheibe gemäß einem der Ansprüche 1 bis 10,
wobei das Trägerteil (14, 24, 34) und das Lagerteil (15, 25, 35) mittels eines lösbaren Befestigungsmittels fest miteinander verbunden sind.

16. Axiallagerscheibe gemäß Anspruch 15,
wobei das lösbare Befestigungsmittel eine Schraubenverbindung ist.

17. Axiallagerscheibe gemäß einem der Ansprüche 1 bis 16,
wobei die Axiallagerscheibe an den Turbomaschinenrotor (10) mittels des Trägerteils (14, 24, 34) fest anbaubar ist.

18. Axiallagerscheibe gemäß Anspruch 17, wobei das Trägerteil (14, 24, 34) auf den Turbomaschinenrotor (10) aufschrumpfbar ist.

19. Axiallagerscheibe gemäß einem der Ansprüche 1 bis 16,
wobei die Axiallagerscheibe (12, 22, 32) an den Turbomaschinenrotor (10) mittels des Lagerteils (15, 25, 35) anbaubar ist.

20. Turbomaschinenrotor für eine Turbomaschine, mit einer Axiallagerscheibe (12, 22, 32) gemäß einem der Ansprüche 1 bis 19.

21. Turbomaschinenrotor gemäß Anspruch 20, wobei der Turbomaschinenrotor (10) eine Welle (11) aufweist, auf der die Axiallagerscheibe (12, 22, 32) mittels einer Schrumpfverbindung (13, 23) befestigt ist.
